# EUROPEAN PATENT APPLICATION

(11) **EP 1 750 359 A2**
(43) Date of publication of application: **07.02.2007**
(21) Application number: 06016377.1
(22) Date of filing: 04.08.2006
(51) Int. Cl.: H02K 21/24

(54) **Straddle-type vehicle incorporating rotary electrical machine, and method for installing the rotary electrical machine**

(30) Priority: 03.03.2006 JP 2006058663; 05.08.2005 JP 2005228943
(71) Applicant: YAMAHA HATSUDOKI KABUSHIKI KAISHA, Iwata-shi, Shizuoka-ken 438-8501 (JP)
(72) Inventor: Nakajima, Masumi, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a straddle-type vehicle comprising a rotary electrical machine including a stator, and a rotor attached to said stator for rotation and rotating together with a rotational shaft, and a rotary member opposing said rotor in an axial direction of said rotational shaft, wherein said stator supports said rotor for rotation, said rotor has an engaging portion, and said rotary member has an engaged portion engaging with said engaging portion in the axial direction.

## Description

The present invention relates to a straddle-type vehicle incorporating a rotary electrical machine, and a method for installing the rotary electrical machine, and relates to a technique that can make installing work of the rotary electrical machine easier.

Conventionally, some straddle-type vehicles such as motorcycles are developed to incorporate a rotary electrical machine that can assist the power of an engine or can run a vehicle by its own power (for example, see JP-A-2000-013913). An axial gap type rotary electrical machine used for such straddle-type vehicles includes a disk-like rotor to which magnets are joined and a stator opposing the rotor in an axial direction of a rotational shaft. The rotor is attached to the rotational shaft, or a flywheel or the like fixed to the rotational shaft so as to rotate together with the rotational shaft, while the stator is attached to a case or the like.

The rotary electrical machine mounted to the vehicle can be a radial gap type. The radial gap type rotary electrical machine includes a rotor having magnets and surrounding an axis of the machine and a stator opposing the rotor in a radial direction and also surrounding the axis. In the radial gap type rotary electrical machine, similarly to the axial gap type, the rotor is attached to the rotational shaft, the flywheel or the like, and the stator is attached to the case or the like.

In some occasions, the conventional rotary electrical machine such that the rotor is attached to the rotational shaft and the flywheel or the like and the stator is attached to the case or the like may not be smoothly assembled. For example, if the stator is attempted to be installed while the stator opposing the rotor after the rotor is fixed to the rotational shaft or the flywheel, the installing work of the stator under a condition that the stator is placed in a right position is difficult because the magnets mounted to the rotor and teeth of the stator attract each other. Particularly, in a case that the magnets generating strong magnetic force are employed in the rotary electrical machine used for vehicles, the installing of the stator in the right position is more difficult.

The present invention is made in view of the problems discussed above, and aims to provide a straddle-type vehicle, and a method for installing a rotary electrical machine, that can make installing work of the rotary electrical machine easier.

The present invention is solved in an inventive manner by a straddle-type vehicle comprising a rotary electrical machine including a stator, and a rotor attached to said stator for rotation and rotating together with a rotational shaft, and a rotary member opposing said rotor in an axial direction of said rotational shaft, wherein said stator supports said rotor for rotation, said rotor has an engaging portion, and said rotary member has an engaged portion engaging with said engaging portion in the axial direction.

Preferably, said rotary electrical machine includes a magnet and a tooth giving a channel of magnetic fluxes formed between said magnet and said tooth, said rotor has either one of said magnet or said tooth, and said rotor is disposed for slide movement in the axial direction, and said stator has the other one of said magnet or said tooth, and said stator supports said rotor for rotation while keeping a spacing distance between the one and the other one.

Further, preferably said rotor has a surface-held-by-bearing, said stator has a bearing holding surface, and said bearing holding surface of the stator holds said surface-held-by-bearing of the rotor for rotation via a bearing.

Still further, preferably said rotary electrical machine has a plurality of said magnets and said teeth, and the plurality of said magnets and the plurality of said teeth are placed to surround said rotational shaft.

Yet further still, preferably a rotational angle of said rotary member is decided to be a reference angle at which said rotary member takes a reference position relative to a body of the vehicle, a rotational angle of said rotor relative to said stator is decided to be a stable angle at which said stator stably supports said rotor by attracting force between the plurality of said magnets and the plurality of said teeth, and said engaging portion and said engaged portion right oppose each other under a condition that said rotor is positioned at the stable angle and said rotary member is positioned at the reference angle.

According to an embodiment, the straddle-type vehicle further comprises a cover for covering said rotary electrical machine in the axial direction of said rotational shaft, said stator capable of being attached to said cover, and said stator being attached to said cover under a condition that said stator supports said rotor at the stable angle when said rotary electrical machine is mounted to the body of the vehicle.

Preferably, the plurality of said magnets and the plurality of said teeth form magnetic fluxes therebetween, and the stable angle of said rotor is an angle at which a difference between respective densities of the magnetic fluxes formed by said magnets neighboring each other is the minimum.

Further, preferably the stable angle of said rotor is an angle at which two of said magnets neighboring each other right oppose two of the plurality of said teeth and entirely overlap with the two of said teeth in the axial direction.

Still further, preferably the stable angle of said rotor is an angle at which respective parts of two of said teeth neighboring each other overlap with one of the plurality of said magnets in the axial direction, and sizes of the respective parts of two of said teeth are equal to each other. Therein, the stable angle of said rotor may be an angle at which said tooth neighboring either one of the two of said teeth right may oppose to any one of the plurality of said magnets.

Yet further still, preferably either one of the engaging portion of said rotor or the engaged portion of said rotary member has a damping section for damping a collision with each other when said rotor rotates. Therein, said rotary member may be a flywheel.

Preferably, the straddle-type vehicle includes the rotary electrical machine having the stator and the rotor attached to the stator for rotation and rotating together with a crankshaft, and the flywheel opposing the rotor in an axial direction of the crankshaft, wherein the stator supports the rotor for rotation, and wherein the rotor has projections, while the flywheel has recessed portions engaging with the projections in the axial direction.

The present invention is also solved in an inventive manner by a method for assembling the straddle-type vehicle, according to one of the above embodiments, comprising the steps of opposing said rotor and said stator with each other, and uniting them to each other by magnetic force, and attaching said rotor and said stator united to each other to the body of the vehicle, and engaging the engaging portion of said rotor with the engaged portion of said rotary member.

Preferably, said method further comprising the steps of supporting said rotor at the stable angle by said stator, and uniting said rotor and said stator to each other, placing said rotary member at the reference angle, right opposing the engaging portion of said rotor united to said stator and the engaged portion of said rotary member, and attaching said rotor and said stator united to each other to the body of the vehicle, and engaging the engaging portion of said rotor with the engaged portion of said rotary member.

Further, preferably said method comprises the steps of supporting said rotor at the stable angle by said stator, attaching said stator to said cover, and uniting said rotor, said stator and said cover to each other, placing said rotary member at the reference angle, right opposing the engaging portion of said rotor and the engaged portion of said rotary member, and attaching said rotor, said stator and said cover united to each other to the body of the vehicle, and engaging the engaging portion of said rotor with the engaged portion of said rotary member.

In the following, the present invention is explained in greater detail with respect to several embodiments thereof in conjunction with the accompanying drawings, wherein:
- FIG. 1: is a side elevational view of a motorcycle which is an example of a straddle-type vehicle configured in accordance with an embodiment,
- FIG. 2: is a side elevational view of a rear portion of the motorcycle,
- FIG. 3: is a cross sectional view taken along the line III-III of FIG. 2,
- FIG. 4: is an enlarged view of FIG. 3,
- FIG. 5: is a front elevational view of a flywheel attached to a crankshaft of the motorcycle,
- FIG. 6: is a front elevational view of a rotor of the rotary electrical machine mounted to the motorcycle,
- FIG. 7: includes a rear elevational view of a fixed stator of the rotary electrical machine and a front elevational view of a movable stator,
- FIG. 8: is an illustration showing a state in which the rotor slides in an axial direction of the crankshaft to be attached to the flywheel,
- FIG. 9: is a schematically illustrated perspective exploded view of the rotary electrical machine,
- FIG. 10: includes illustrations showing relationships between positions of magnets and fixed teeth when the rotor is positioned at a stable angle,
- FIG. 11: includes illustrations showing states in which a movable stator rotates relative to a fixed stator,
- FIG. 12: is a cross sectional view of a rotary electrical machine provided to a motorcycle which is an example modified in accordance with another embodiment,
- FIG. 13: is a front elevational view of a flywheel mounted to the crankshaft of the motorcycle modified in accordance with the another embodiment,
- FIG. 14: includes front and rear elevational views and a cross sectional view of a rotor of the rotary electrical machine mounted to the motorcycle modified in accordance with the another embodiment, and
- FIG. 15: is an illustration showing a state in which the rotary electrical machine of the motorcycle modified in accordance with the another embodiment.

### Description of Reference Numerals and Symbols:

1, 100: motorcycle
3: front wheel
5: front fork
7: steering shaft
9: handlebar
11: grip
13: seat
15: rear suspension
16: rear arm
17: rear wheel
19: case cover (cover)
20, 200: rotary electrical machine
21, 210: rotor
22, 220: yoke
22c: projection (engaging portion)
22d: surface-held-by-bearing
23, 230: magnet
25: stator
30: fixed stator
31: coil
34: fixed tooth
36: resin section
36c: bearing holding surface
37: engaging portion
40: movable stator
41: movable tooth
42: base
43: resin section
50: engine
51: crankshaft (rotational shaft)
52: bearing
53: bearing
54: seal member
55: one-way clutch
56, 560: flywheel (rotary member)
56e: recessed portion (engaged portion)
57: nut
59: bolt hole
60: self-starting motor
61: starter reduction motor
62, 68: gear
63: bearing
64: bearing
65: engaging member
66: motor
240: circular section
240b: recessed portion (engaging portion)
560j: projection (engaged portion)
H: spacing distance

Embodiments will be described below based upon drawings.

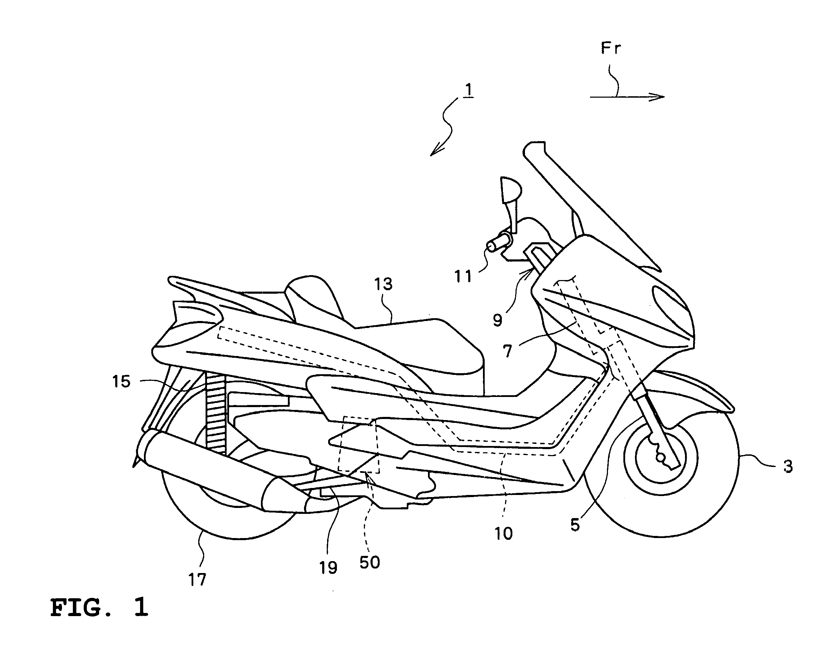

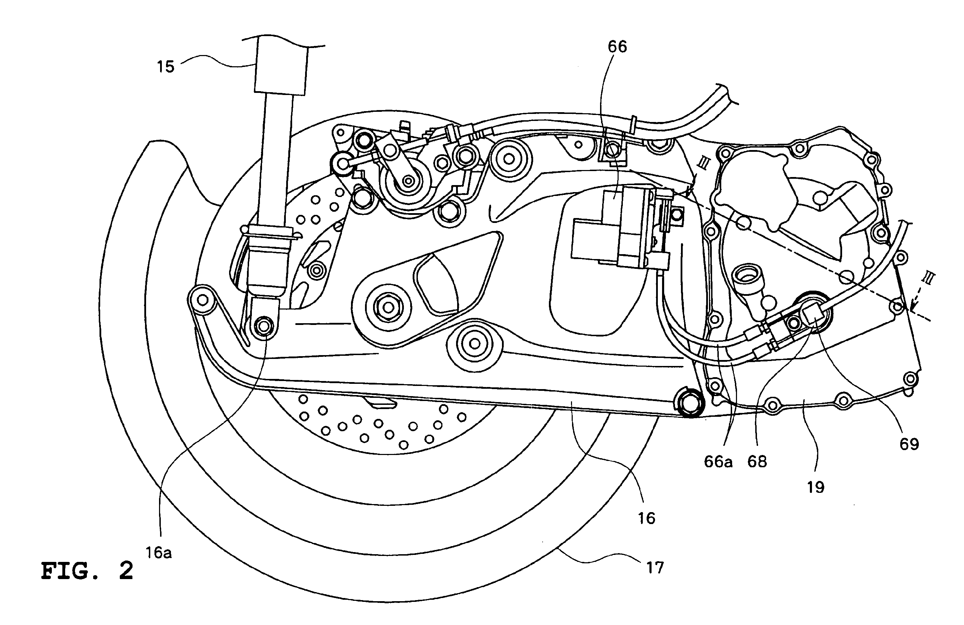

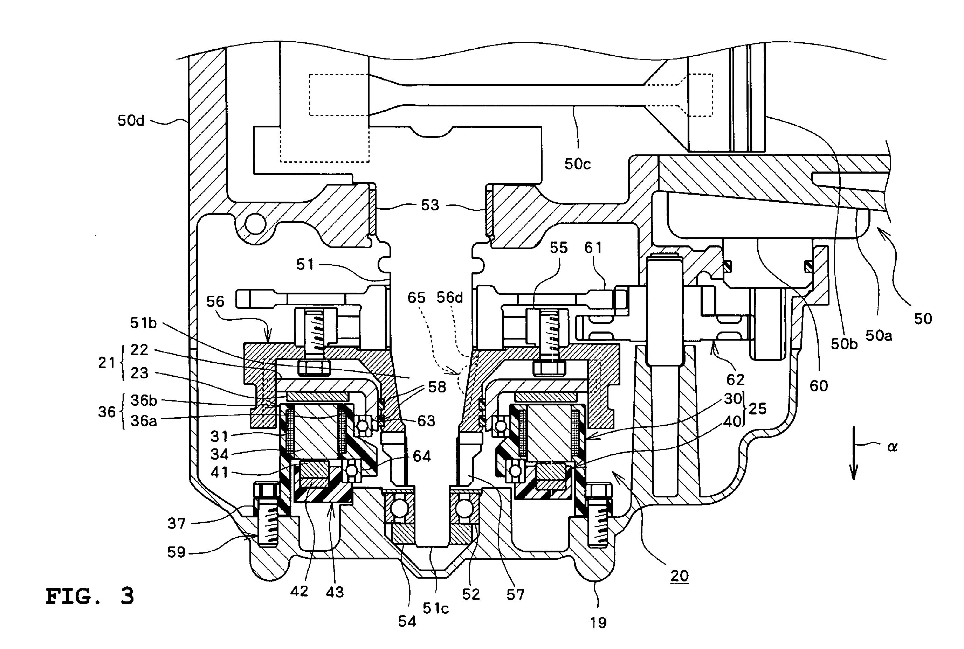

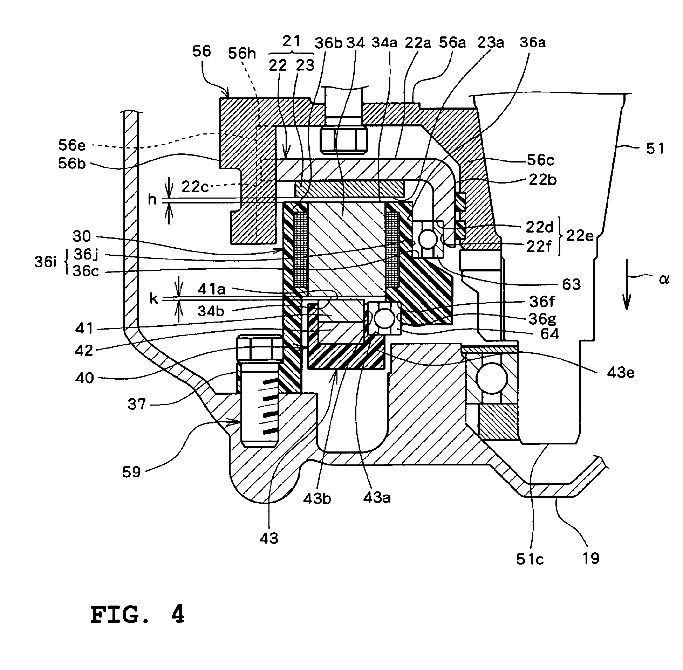

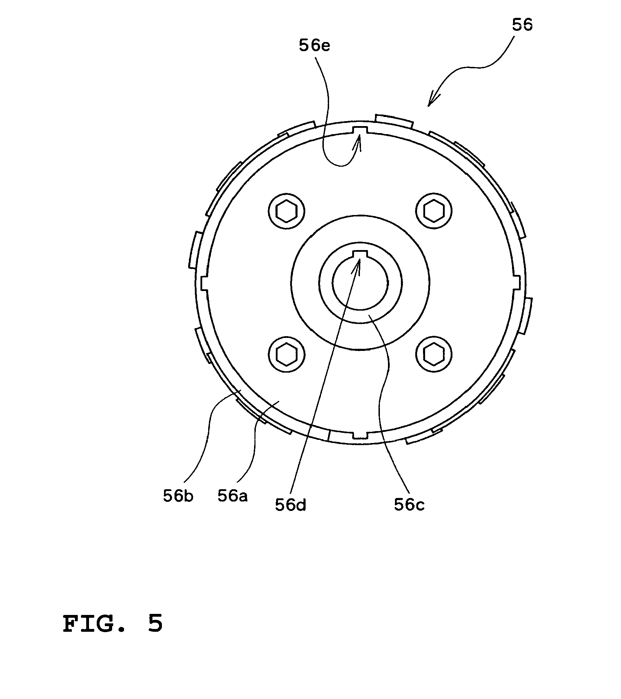

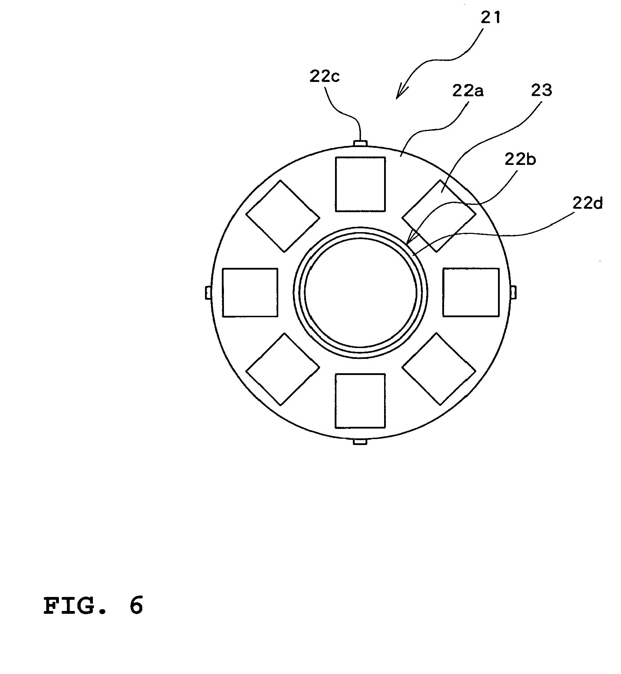

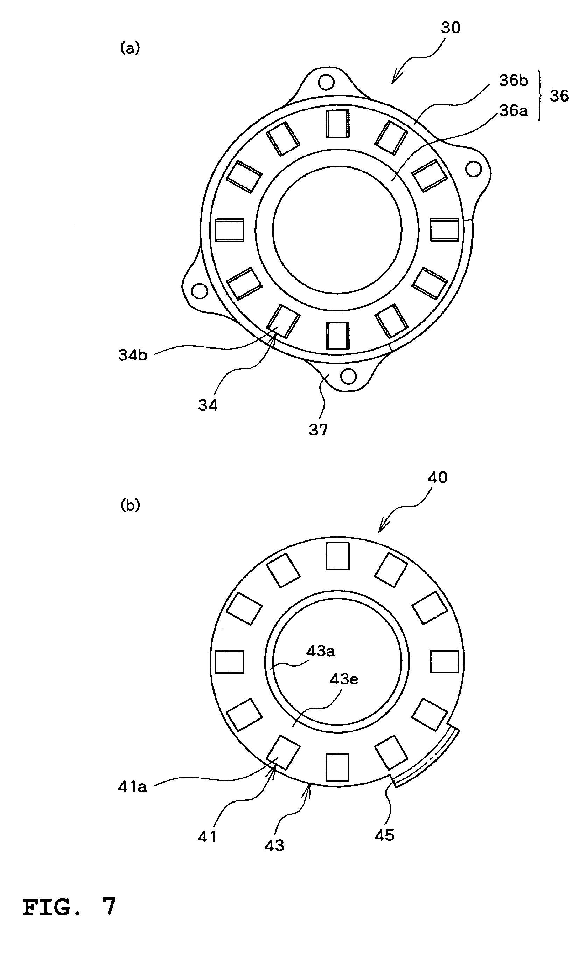

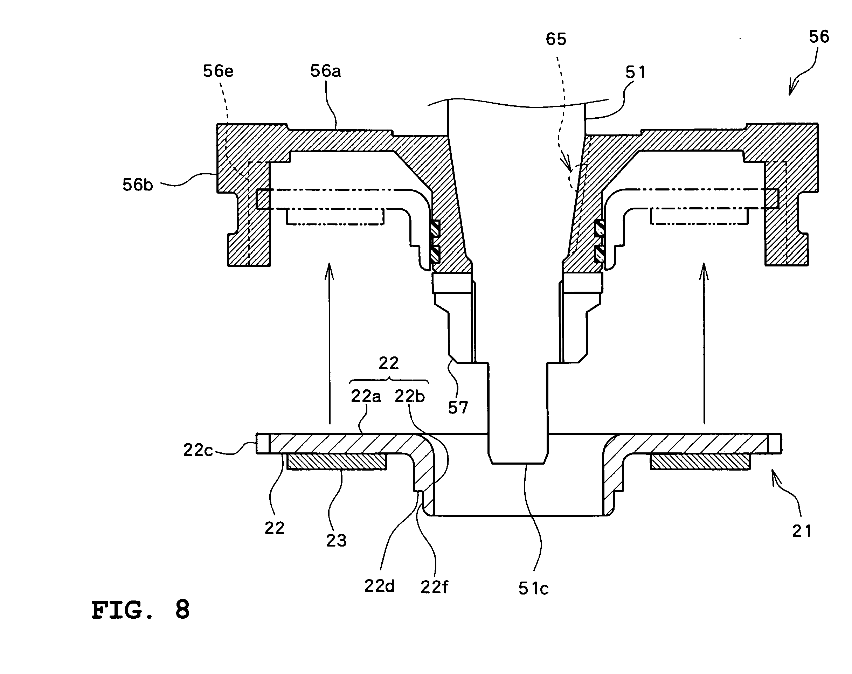

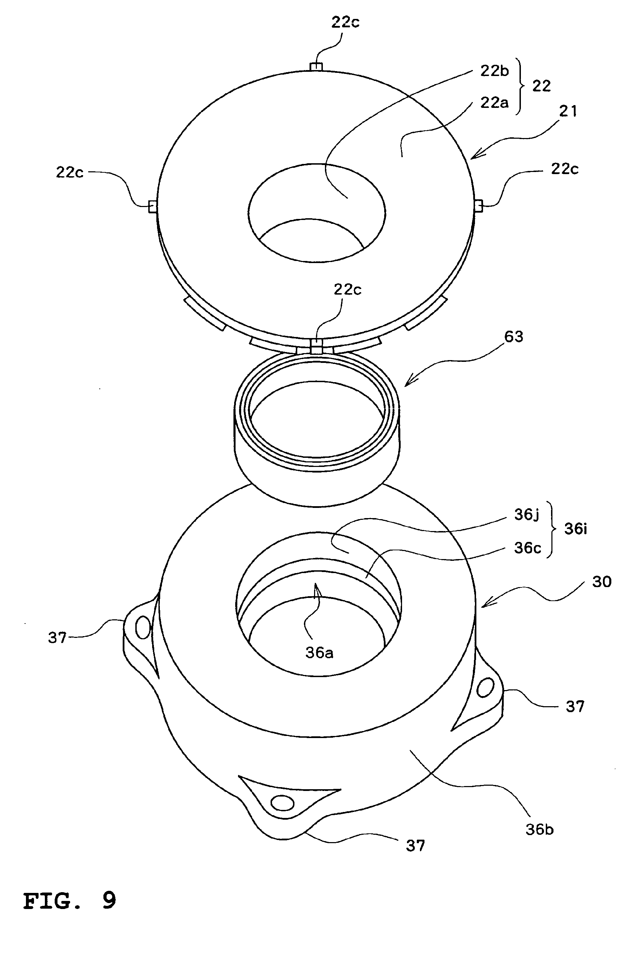

FIG. 1 is a side elevational view of a motorcycle 1 which is an example of a straddle-type vehicle configured in accordance with an embodiment. FIG. 2 is a side elevational view of a rear portion of the motorcycle 1. FIG. 3 is a cross sectional view taken along the line III-III of FIG. 2. FIG. 4 is an enlarged view of a rotary electrical machine 20 of FIG. 3. FIG. 5 is a front elevational view of a flywheel 56 attached to a crankshaft 51. FIG. 6 is a front elevational view of a rotor 21 of the rotary electrical machine 20. FIG. 7 includes a rear elevational view of a fixed stator 30 which forms a stator 25 and a front elevational view of a movable stator 40 which also forms the stator 25. FIG. 8 is an illustration showing a state in which the rotor 21 slides in an axial direction of the crankshaft 51 (simply called "axial direction" below) to be attached. FIG. 9 is a schematically illustrated perspective exploded view of the rotary electrical machine 20. Additionally, a silencer, a body cover, etc. are omitted in FIG. 2. The front elevational view of FIG. 5 shows a surface opposing the rotor 21 of the flywheel 56. The front elevational view of FIG. 6 shows a surface opposing the fixed stator 30 of the rotor 21. The front elevational view of FIG. 7(a) shows a surface opposing the movable stator 40 of the fixed stator 30. The front elevational view of FIG. 7(b) shows a surface opposing the fixed stator 30 of the movable stator 40.

As shown in FIG. 1, the motorcycle 1 has a front wheel 3 in a lower front portion of the body. A front fork 5 supports the front wheel 3 for rotation at a bottom end portion thereof. A steering shaft 7 is coupled with a top end portion of the front fork 5 to extend obliquely upward. Handlebars 9 are attached to a top end portion of the steering shaft 7 to extend in a width direction of the body. Respective ends of the handlebars 9 have a grip 11. A body frame 10 is attached to a center portion of the steering shaft 7.

The body frame 10 extends obliquely downward from a front portion of the body to a rear portion thereof. Then, the body frame 10 bends and extends straightly. Afterwards, the body frame 10 further bends to extend obliquely upward. A seat 13 is disposed in an upper rear portion of the body frame 10. A top end of a rear suspension 15 is connected to a rear end portion of the body frame 10. A bottom end of the rear suspension 15 is connected to a rear end portion 16a of the rear arm 16 (see FIG. 2). The rear arm 16 supports a rear wheel 17 for rotation. The drive force of an engine 50 is transmitted to the rear wheel 17 through a drive force transmitting mechanism such as a belt type continuously variable transmission so that the rear wheel 17 rotates. The engine 50 is disposed in a lower center portion of the body frame 10.

A center portion of the engine 50 has a cylinder block 50a. The cylinder block 50a encloses a piston 50b. A top end of a connecting rod 50c is coupled with the piston 50b. A crankshaft 51 is attached to a bottom end of the connecting rod 50c.

A rotary electrical machine 20 is disposed in an outer location of the engine 50 in a width direction of the body (i.e., the direction indicated by the symbol [α] of FIG. 3). The rotary electrical machine 20 is attached to the crankshaft 51 (see FIG. 3). The rotary electrical machine 20 assists the power of the engine 50 or runs a vehicle by its own power. In addition, the rotary electrical machine 20 functions as a generator when a charge amount of a battery (not shown) is lower than a preset amount or in a similar situation.

As shown in FIGs. 3 and 4, a bearing 52 supports the crankshaft 51 for rotation. A case cover 19 covering a crankcase 50d laterally holds the bearing 52. Another bearing 53 which forms an oil film between the bearing 53 and a surface of the crankshaft 51 supports a center portion of the crankshaft 51 for rotation. The crankcase 50d holds the bearing 53. A seal member 54 is put on a distal end 51 c of the crankshaft 51 from an outer location in the width direction of the body.

A starter reduction gear 61, a one-way clutch 55, a flywheel 56 and the rotary electrical machine 20 are attached to the crankshaft 51 in this order from the center portion of the crankshaft 51 (i.e., the side where the connecting rod 50c is coupled) to the distal end 51c thereof.

First, the starter reduction gear 61 and the one-way clutch 55 will be described. The starter reduction gear 61 is meshed with a gear 62 which in turn meshes with an output shaft of a self-starting motor 60. When starting an engine operation, the starter reduction gear 61 transmits the drive force of the self-starting motor 60 to the one-way clutch 55. The drive force transmitted to the one-way clutch 55 is transmitted to the crankshaft 51 through the flywheel 56 rotating together with the one-way clutch 55. On the other hand, after the engine 50 is started, the rotation of the self-starting motor 60 stops. Because the one-way clutch 55 independently rotates relative to the starter reduction gear 61, the drive force of the engine 50 is not transmitted to the self-starting motor 60. Additionally, the starter reduction gear 61 idles relative to the crankshaft 51.

Next, the flywheel 56 (rotary member) will be described. As shown in FIG. 4 or FIG. 5, the flywheel 56 includes a disk-like shaped disk section 56a, a cylindrically shaped large diameter cylindrical section 56b, and a cylindrically shaped small diameter cylindrical section 56c. A center of the disk section 56a has an aperture through which the crankshaft 51 extends. The large diameter cylindrical section 56b extends in the axial direction from the rim of the disk section 56a toward the rotary electrical machine 20. The small diameter cylindrical section 56c extends in the axial direction from the rim of the aperture of the disk section 56a toward the rotary electrical machine 20.

A plurality of bolt holes is formed at certain positions of the disk section 56a in a radial direction thereof. Also, bolt holes are formed at positions of the one-way clutch 55 corresponding to the positions of the disk section 56a. Bolts are inserted into the bolt holes of the disk section 56a and the bolt holes of the one-way clutch 55 and fastened so that the flywheel 56 is fixed to the one-way clutch 55.

An inner circumferential surface of the small diameter cylindrical section 56c has a groove-like recessed portion 56d extending straightly in the axial direction. On the other hand, a circumferential surface of the crankshaft 51 has a recessed portion corresponding to the inner circumferential surface of the flywheel 56. An engaging member 65 which is suitable to a configuration of the recessed portion of the crankshaft 51 is fitted into this recessed portion. A part of a peripheral portion of the engaging member 65 protrudes from the circumferential surface of the crankshaft 51 so as to engage with the recessed portion 56d of the flywheel 56. Because the engaging member 65 engages with both of the flywheel 56 and the crankshaft 51, the relative positions of the flywheel 56 and the crankshaft 51 to each other are decided in the rotational direction.

The inner circumferential surface of the small diameter cylindrical section 56c tapers toward the distal end 51c of the crankshaft 51 (see FIG. 4). The crankshaft 51 has a taper section 51b tapering toward the distal end 51c. The crankshaft 51c is inserted into the small diameter cylindrical section 56c, and the inner circumferential surface of the small diameter cylindrical section 56c abuts the outer circumferential surface of the taper section 51b. The flywheel 56 thus is prevented from moving further toward the center of the crankshaft 51 than the taper section 51b. Thereby, a position of the flywheel 56 on the crankshaft 51 is decided. A nut 57 is put on the crankshaft 51 from an outside position thereof (the distal end 51c side). The nut 57 pushes the flywheel 56 toward the center of the crankshaft 51 so as to press the inner circumferential surface of the small diameter section 56c to the outer circumferential surface of the taper section 51b. Therefore, the flywheel 56 is coupled with the crankshaft 51 by friction.

An inner circumferential surface of the large diameter cylindrical section 56b has groove-like recessed portions (engaged portion) 56e extending straightly in the axial direction. The multiple recessed portions 56e are spaced apart from each other in the circumferential direction. A yoke 22 of the rotor 21 which the rotary electrical machine 20 incorporates engages with the recessed portions 56e. The rotor 21 thus rotates with the flywheel 56. The engagement between the yoke 22 and the flywheel 56 will be described in greater detail below.

Next, the rotary electrical machine 20 will be described. The rotary electrical machine 20 includes the rotor 21 and the stator 25 in this order from the center of the crankshaft 51. In this embodiment, a stator unit having a fixed stator 30 opposing the rotor 21 and a movable stator 40 opposing the fixed stator 30 on an opposite side to the rotor 21 is employed as the stator 25. As is described below, the field magnet generated by the stator 25 can be varied optionally.

As shown in FIG. 4 or FIG. 6, the rotor 21 has the yoke 22 and magnets (magnets for the field magnet) 23. The yoke 22 has a generally disk-like shaped disk section 22a and a cylindrically shaped inner cylindrical section 22b. A center of the disk section 22a has a through-hole. The inner cylindrical section 22b extends in the axial direction from the rim of the through-hole toward the fixed stator 30.

The crankshaft 51 and the small diameter cylindrical section 56c of the flywheel 56 are inserted into the inner cylindrical section 22b. Two circular elastic members 58, 58 are fitted into a space between the inner cylindrical section 22b and the small cylindrical section 56c of the flywheel 56. The elastic members 58, 58 seal the space between the inner circumferential surface of the inner cylindrical section 22b and the outer circumferential surface of the small cylindrical section 56c of the flywheel 56 so as to, for example, inhibit the rotor 21 from vibrating when the rotary electrical machine 20 rotates. Additionally, the multiple magnets 23 are circularly placed to surround the crankshaft 51 and are joined to a surface of the disk section 22a facing the fixed stator 30.

As shown in FIG. 4 or FIG. 8, the rotor 21 is attached to the flywheel 56 so as be slidable in the axial direction. Specifically, an outer diameter of the disk section 22a of the yoke 22 is almost equal to an inner diameter of the large diameter cylindrical section 56b of the flywheel 56. A circumferential portion of the disk section 22a has projections 22c (engaging portions) projecting outward in the radial direction which number is the same as the recessed portions 56e (engaged portions) of the flywheel 56. The projections 22c slide along the recessed portions 56e so that the rotor 21 can slide in the axial direction. When the rotary electrical machine 20 is installed, by moving the rotor 21 toward the flywheel 56, the multiple recessed portions 56e receive the projections 22c and engage with them in such a manner that the rotational force is transmitted from the projections 22c. The installing manner of the rotary electrical machine 20 and positions where the recessed portions 56e and the projections 22c are formed will be described in greater detail below.

The stator 25 will be described now. As discussed above, the stator 25 includes the fixed stator 30 and the movable stator 40. Also, the stator 25 has coils 31 that generate the magnetic force when electric current is given. As shown in FIG. 4 and FIG. 7(a), the fixed stator 30 has a plurality of fixed teeth 34 each formed with an iron core. Each coil 31 is wound around the respective fixed tooth 34. The fixed teeth 34 are circularly arranged to surround the crankshaft 51. End surfaces 34a (magnetic flux generating area) of the respective fixed teeth facing the rotor 21 oppose the magnets 23 of the rotor 21. Those multiple fixed teeth 34 and coils 31 are molded by a resin section 36 formed with resin that contains lubricant. The resin section 36 is circularly formed around the axis of the crankshaft 51. The resin section 36 has a generally cylindrical inner circumferential section 36a positioned more inside than a coil block formed with the multiple coils 31 (location closer to the crankshaft 51 than the multiple coils 31), and a generally cylindrical outer circumferential section 36b outside the coil block (see FIG. 3).

An outer circumferential section 36b is fixed to the case cover 19. That is, the outer circumferential section 36b is formed to extend to the case cover 19. A peripheral end facing the case cover 19 has a plurality of engagement portions 37. Each engagement portion 37 extends outward in the radial direction from the peripheral end of the outer circumferential section 36b facing the cover 19 (see FIG. 6 and FIG. 7(a)). Each engagement portion 37 has bolt holes. On the other hand, the case cover 19 has bolt holes 59 at portions corresponding to the engagement portions 37. The engagement portions 37 are bolted to the case cover via the holes of the engagement portions and the corresponding bolt holes 59. Thereby, the fixed stator 30 is fixed to the case cover 19.

As shown in FIG. 4, the respective end surfaces 34a of the fixed teeth 34 oppose the disk section 22a of the yoke 22, while the inner circumferential section 36a oppose the inner cylindrical section 22b of the yoke 22.

A bearing 63 is positioned inside of the inner circumferential section 36a. The inner circumferential section 36a supports the rotor 21 via the bearing 63 for rotational movement while keeping the spacing distance between the fixed teeth 34 and the magnets 23. Specifically, the inner circumferential section 36a has a bearing holding portion 36i. The bearing holding portion 36i has a circular bearing holding surface 36c and a bearing abutting surface 36j. The bearing holding surface 36c opposes the rotor 21 and extends normal to the axial direction. The bearing abutting surface 36j entirely abuts an outer circumferential surface of the bearing 63.

The inner cylindrical section 22b of the yoke 22 has a portion-held-by-bearing 22e at a portion closer to the distal end 51 c of the crankshaft 51 (closer to the fixed stator 30). The portion-held-by-bearing 22e has a circular surface-held-by-bearing 22d and a bearing abutting surface 22f. The surface-held-by-bearing 22d opposes the fixed stator 30 and extends normal to the axial direction. The bearing abutting surface 22f is cylindrically formed around the axis and abuts the inner circumferential surface of the bearing 63.

The bearing 63 is positioned between the bearing holding surface 36c of the fixed stator 30 and the surface-held-by-bearing 22d of the yoke 22. As discussed above, the rotor 21 is slidable in the axial direction of the crankshaft 51. The fixed stator 30 attracts the rotor 21 by the magnetic force. The bearing holding surface 36c holds the surface-held-by-bearing 22d of the yoke 22 against the magnetic force via the bearing 63. Thereby, an opposing surface 23a of each magnet 23 opposing the fixed stator 30 is spaced apart from the end surface 34a of the respective tooth 34 opposing the magnet 23 by a distance [h].

The bearing 63 abuts both of the bearing abutting surface 36j of the inner circumferential section 36a and the bearing abutting surface 22f of the yoke 22. Thus, the yoke 22 rotates around the axis of the crankshaft 51 without swinging in the radial direction. As thus discussed, the inner circumferential section 36a supports the rotor 21 for rotational movement through the bearing 63. Additionally, in FIG. 9, the coils 31 and the fixed teeth 34 are omitted.

A configuration of the inner circumferential section 36a facing the movable stator 40 will be described in greater detail. The inner circumferential section 36a facing the movable stator 40 has a circular bearing holding surface 36f opposing the movable stator 40 and surrounding the axis and a circular projection 36g surrounding the axis. The bearing holding surface 36f extends normal to the axial direction. The projection 36g is formed to extend from an inner peripheral end of the bearing holding surface 36f toward the movable stator 40. An inner circumferential surface of a bearing 64 abuts an outer circumferential surface of the projection 36g. The bearing holding surface 36f holds the bearing 64.

As discussed above, the movable stator 40 opposes the fixed stator 30 on the opposite side to the rotor 21. The movable stator 40 has movable teeth 41 which number is the same as the fixed teeth 34 and a circular base 42 (see FIG. 4 or FIG. 7(b)). The base 42 supports the movable teeth 41 such that the multiple movable teeth are circularly disposed about the crankshaft 51. The base 42 and the movable teeth 41 are molded by a resin section 43 formed with resin containing lubricant. The resin section 43 has a circular inner circumferential section 43e inside of the multiple movable teeth 41 and the base 42 (side closer to the crankshaft 51).

The inner circumferential section 43e has a bearing holding surface 43a. The bearing holding surface 43a extends normal to the axial direction and opposes the fixed stator 30. Because the bearing 64 supports the bearing holding surface 43a, an end surface 41 a of each movable tooth 41 is spaced apart from an end surface 34b of the respective fixed tooth 34 by a distance [k].

That is, the bearing 64 is positioned between the bearing holding surface 43a and the bearing holding surface 36f of the fixed stator 30. Each movable tooth 41 is formed with an iron core. The magnetic force of the coils 31 attracts the movable stator 40 toward the fixed stator 30. The bearing holding surface 36f supports the bearing holding surface 43a of the movable stator 40 against the magnetic force through the bearing 64. Thereby, the end surface 41 a of each movable tooth 41 is spaced apart from the end surface 34b of the respective fixed tooth 34 by the distance [k].

An inner surface of the inner circumferential section 43e of the movable stator 40 has an abutting surface 43b which abuts an outer circumferential surface of the bearing 64. The abutting surface 43b abuts the outer circumferential surface of the baring 64. The movable stator 40 rotates around the axis while being prevented from moving in the radial direction.

As shown in FIG. 7(b), an outer circumferential surface of the resin section 43 has a gear meshing portion 45 projecting in the radial direction. The gear meshing portion 45 has a length in a circumferential direction. An engaging section (for example, a gear) meshes with the gear meshing portion 45 to rotate the movable stator 40 relative to the fixed stator 30.

The positions where the projections 22c of the rotor 21 and the recessed portions 56e of the flywheel 56 are formed and an installing manner of the rotary electrical machine 20 to the body of the vehicle will be described below.

A rotational angle of the flywheel 56 which is rotatable about the crankshaft 51 is predetermined as a reference angle which gives a reference position to the body of the vehicle. The reference angle is, for example, an angle at which the recessed portion 56d of the flywheel 56 is placed at the highest position or the lowest position. Meanwhile, reference positions are previously given to the rotor 21, the stator 25 and the case cover 19 so as to be positions they take when they are mounted. The reference position of the case cover 19 is a position which gives the mounting position, i.e., at which the mounting position of the crankcase 50d and the mounting position of the case cover 19 oppose each other. The reference position of the stator 25 is a position at which the engaging portion 37 of the fixed stator 30 opposes the bolt holes 59 of the case cover 19 which is in the mounting position. The reference position of the rotor 21 is a position at which a rotational angle relative to the fixed stator 30 which is in the reference position is a stable angle. In this regard, the stable angle is an angle at which the fixed stator 30 stably supports the rotor 21 by attractive force (magnetic force) between the magnets 23 and the fixed teeth 34. The positions where the projections 22c and the recessed portions 56e are formed are positions at which the flywheel 56 and the rotor 21 right oppose each other under a condition that the flywheel 56 is placed at the reference angle and the rotor 21 is placed at the stable angle. That is, when the flywheel 56 is positioned at the reference angle and the case cover 19, the stator 25 and the rotor 21 are placed at the respective reference positions, the projections 22c and the recessed portions 56e right oppose each other.

The stable angle will be described in greater detail below. The stable angle is an angle at which a difference between respective densities of the magnetic fluxes formed between the magnets 23 neighboring each other and the fixed teeth 34 is the minimum, and an angle at which the magnetic force affected to the magnets 23 balances and no force is given to the rotor 21 in its rotational direction. Therefore, the fixed stator 30 can stably support the rotor 21 which is positioned at the stable angle.

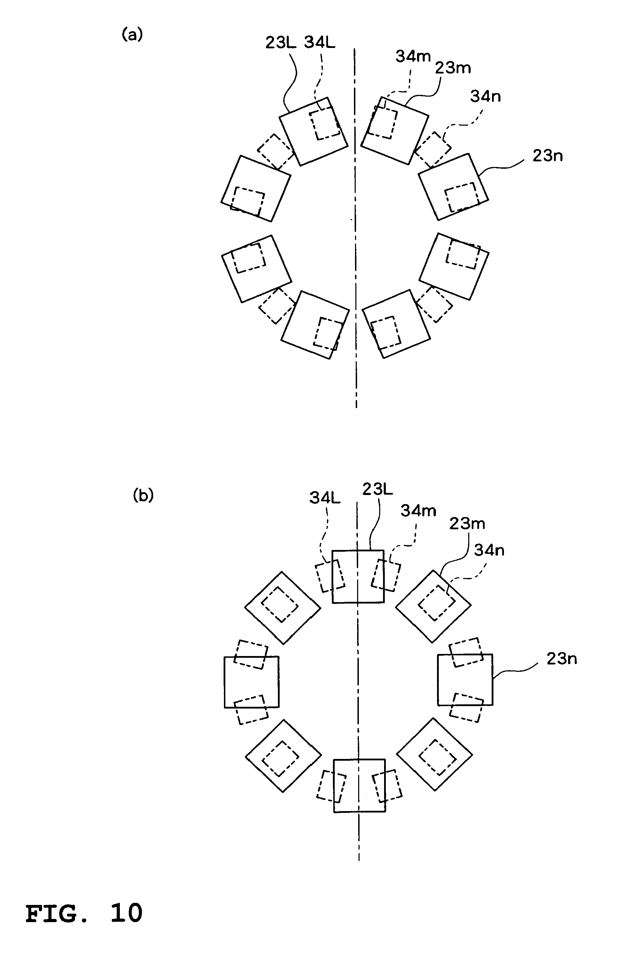

FIG. 10 includes illustrations showing an example of relationships between positions of the magnets 23 and the fixed teeth 34 when the rotor 21 is positioned at the stable angle. The relationships will be described below based upon the rotor 21 having eight magnets 23 and twelve fixed teeth 34. In FIG. 10, each fixed tooth 34 is indicated by the two dashed line.

As shown in FIG. 10(a), under the condition that the rotor 21 is positioned at the stable angle, all the magnets 23 and fixed teeth 34 are symmetrically disposed relative to a certain center line that extends normal to the crankshaft 51. Also, the fixed teeth 34L, 34m neighboring each other overlap with the respective magnets 23L, 23m neighboring each other in the axial direction. Further, the fixed tooth 34n neighboring the fixed tooth 34m is placed at the mid portion between the magnets 23m, 23n neighboring each other.

As shown in FIG. 10(b), the stable angle is the angle at which respective portions of the two fixed teeth 34L, 34m neighboring each other overlap with any one of the magnets 23 in the axial direction. The stable angle can be an angle at which areas of the respective portions are equal to each other. In this regard, as shown in FIG. 10(b), preferably, the fixed tooth 34n neighboring the fixed tooth 34L right opposes the magnet 23n.

The rotary electrical machine 20 can be attached to the motorcycle 1 as thus constructed in the following manner.

First, the fixed stator 30, the movable stator 40 and the rotor 21 are united to each other by the magnetic force of the magnets 23. In this process, the rotor 21 is opposed to the fixed stator 30 so as to be at the stable angle. The movable stator 40 is placed oppositely to the rotor 21 with the fixed stator 30 therebetween. Next, the engaging portions 37 of the fixed stator 30 are bolted to the bolt holes 59. The united rotor 21, fixed stator 30 and movable stator 40 are attached to the case cover 19 to be placed at the respective reference positions. Also, the flywheel 56 is positioned at the reference angle described above. As a result, the recessed portions 56e of the flywheel 56 and the projections 22c of the rotor 21 right oppose each other in the axial direction. Then, the case cover 19 is attached to the crankcase 50d together with the rotor 21, the fixed stator 30 and the movable stator 40. In this process, the rotor 21 is sled into the flywheel 56, and the recessed portions 56e receive the projections 22c in the axial direction to be engaged with the projections 22c so that the rotational force can be transmitted.

According to the motorcycle 1 discussed above, the fixed stator 30 attracts the rotor 21 by the magnetic force to support the rotor 21 for rotation. Thus, the stator 25, the case cover 19 and the rotor 21 can be united to each other before they are attached to the crankshaft 51. The flywheel 56 has the recessed portions 56e extending in the axial direction, while the rotor 21 has the projections 22c projecting outward in the radial direction. Thereby, in the installing state, the rotor 21 can be moved to the flywheel 56 so that the case cover 19, the stator 25 and the rotor 21 can be attached to the body of the vehicle. As a result, the rotary electrical machine can be more easily attached to the body of the vehicle.

Also, according to the rotary electrical machine 20 described above, the fixed stator 30 is fixed to the case cover 19 not to move in the axial direction, while the rotor 21 is attached to the flywheel 56 to be movable in the axial direction. In addition, the fixed stator 30 supports the rotor 21 through the bearing 63. Therefore, even though any errors exist in the configuration of the case cover 19 or in the attached positions of the flywheel 56, the respective spacing distances between the opposing surfaces 23a of the magnets 23 and the end surfaces 34a of the fixed teeth 34 can be accurately set.

Additionally, in the rotary electrical machine 20, the movable stator 40 rotates around the axis relative to the fixed stator 30. Thereby, the rotary electrical machine 20 can vary its output characteristics such as a high torque and low speed rotation or a low torque and high speed rotation.

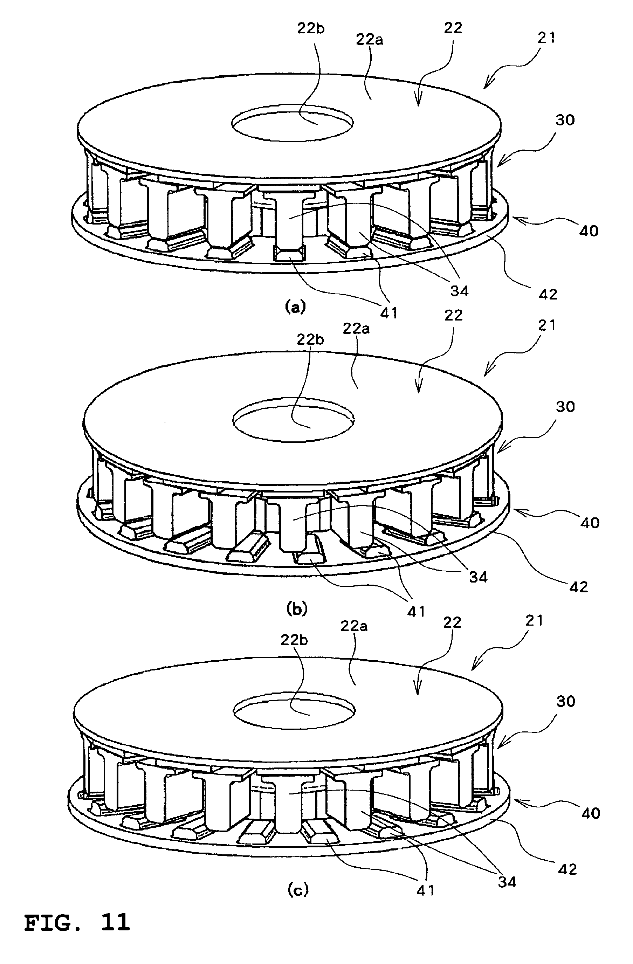

FIG. 11 includes illustrations showing states in which the movable stator 40 rotates around the axis of the crankshaft 51. For the explaining purpose, in this figure, the resin section 36 of the fixed stator 30 and the resin section 43 of the movable stator 40 both shown in FIG. 3, the crankshaft 51 and the coils 31 are omitted. Also, in this figure, the same portions as those of FIG. 3 are assigned with the same reference numerals and symbols.

FIG. 11(a) shows that the movable teeth 41 right oppose the fixed teeth 34. Under this condition, the spacing distance between the end surface 34b of each fixed tooth 34 facing the respective movable tooth and the end surface 41 a of each movable tooth 41 facing the respective fixed tooth 34 is the smallest value [k] (see FIG. 4). In this state, the magnetic fluxes pass through the fixed teeth 34, the movable teeth 41, the base 42 and the magnets 23. The magnetic fluxes flow from the end surfaces 34a of the respective fixed teeth 34 facing the magnets 23 to the opposite end surfaces 34b thereof, i.e., through the insides of the respective coils 31.

A motor 66 which will be described below drives the movable stator 40 to rotate. The movable stator 40 rotates to the position shown in FIG. 11(c), i.e., until each movable tooth 41 is intermediately positioned between the respective fixed tooth 34 and the neighboring fixed tooth 34 after taking a middle position shown in FIG. 11(b). In this state, the spacing distance between the end surface 34b of each fixed tooth 34 facing the respective movable tooth 41 and the end surface 41a of each movable tooth 41 facing the respective fixing tooth 41 is enlarged. The magnetic fluxes thus are least to be weaker than those in the state of FIG. 11(a). Because the magnetic fluxes are weak under the condition shown in FIG. 11(c), the rotary electrical machine 20 works as a low torque and high speed rotation type rotary electrical machine. On the other hand, under the condition shown in FIG. 11(a), the magnetic fluxes are stronger than those in the state of FIG. 11(c) because the magnetic fluxes flow through the insides of the respective coils 31. The rotary electrical machine 20 thus works as a high torque and low speed rotation type rotary electrical machine.

Additionally, such a rotation of the movable stator 40 is practicable because of being driven by the motor 66. Specifically, the gear meshing portion 45 formed on the outer circumferential surface of the resin section 43 of the movable stator 40 projects outward in the radial direction to mesh with the gear 68. A wire 66a is wound around the gear 68, and the wire 66a is connected to the motor 66 (see FIG. 2). When the motor 66 rotates in a right direction or in a reverse direction, the movable stator 40 rotates around the axis relative to the fixed stator 30. In addition, the gear 68 has a rotational angle detecting sensor 69 which detects a rotational angle of the gear 68.

Next, another embodiment will be described.

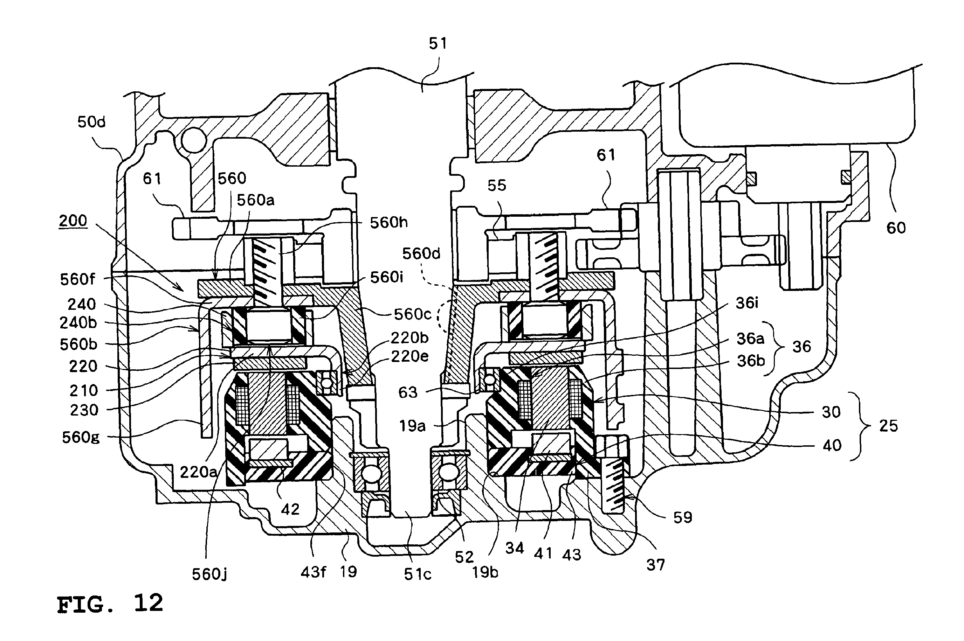

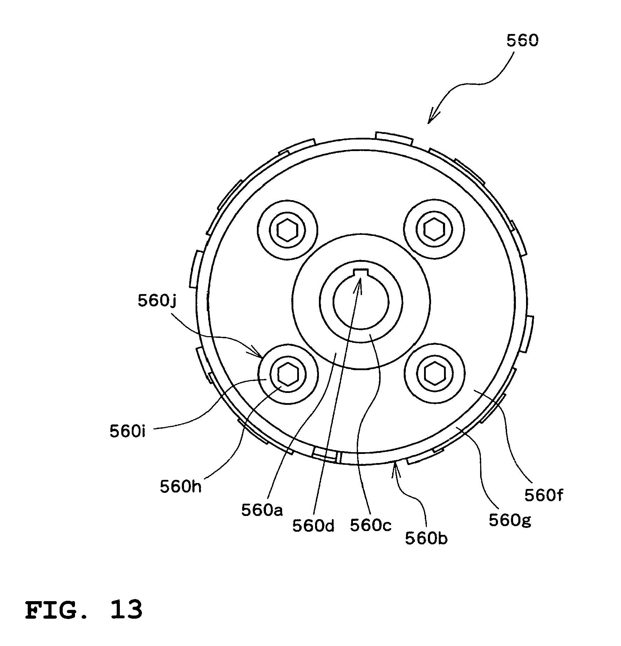

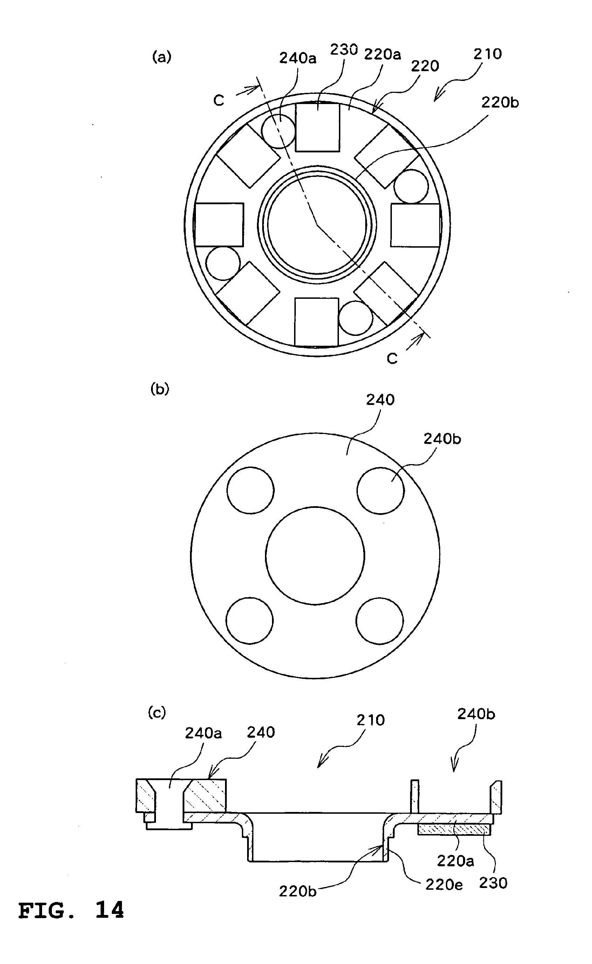

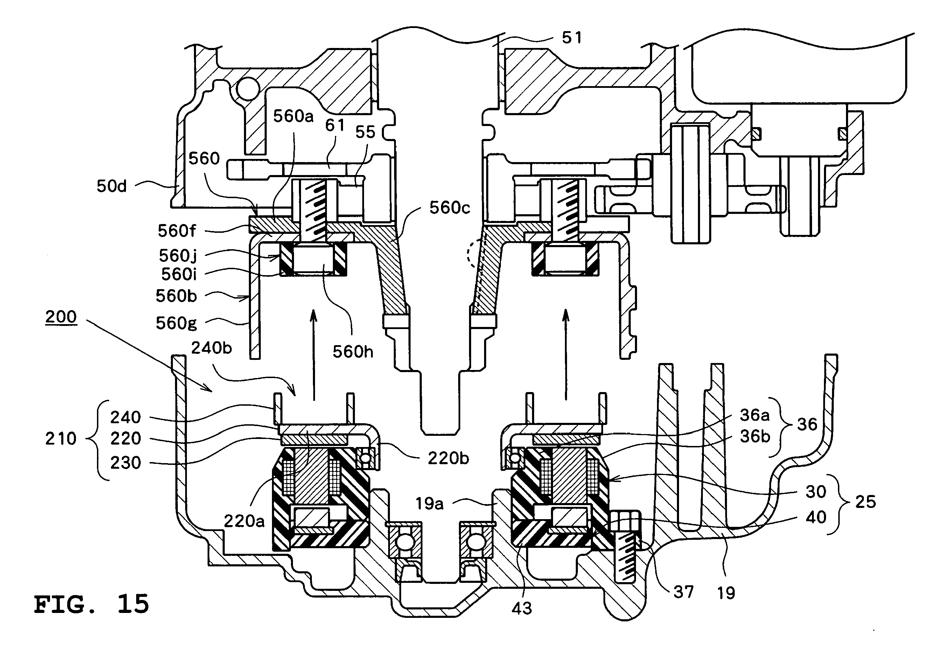

FIG. 12 is a cross sectional view of a rotary electrical machine 200 which is provided to a motorcycle 100 modified in accordance with the another embodiment. FIG. 13 is a front elevational view of a flywheel 560 which is provided to the motorcycle 100. FIG. 14(a) is a front elevational view of a rotor 210 which is provided to the rotary electrical machine 200. FIG. 14(b) is a rear elevational view of the rotor 210. FIG. 14(c) is a cross sectional view taken along the line c-c of FIG. 14(a). FIG. 15 is an illustration showing a state in which the rotary electrical machine 200 is mounted to the body of the vehicle together with the cover case 19. The front elevational view of FIG. 13 shows a surface of the flywheel 560 opposing the rotor 210. In FIG. 14, the front elevational view shows a surface facing the fixed stator 30, while the rear elevational view shows a surface opposing the flywheel 56. Additionally, in those figures, the same portions as those of the motorcycle 1 and the rotary electrical machine 20 will be assigned with the same reference numerals and symbols, and the descriptions about them will be omitted.

As shown in FIG. 12, in the motorcycle 100, the starter reduction gear 61, the one-way clutch 55, the flywheel 560 and the rotary electrical machine 200 are attached to the crankshaft 51, similarly to the motorcycle 1 discussed above. As shown in FIG. 13, the flywheel 560 includes a disk-like shaped disk section 560a, a cylindrically shaped small diameter cylindrical section 560c, and an inertia mass section 560b.

A center of the disk section 560a has an aperture through which the crankshaft 51 extends. The small diameter cylindrical section 560c extends in the axial direction from the rim of the aperture of the disk section 560a (see FIG. 12). An inner circumferential surface of the small diameter cylindrical section 560c has a recessed portion 560d extending in the axial direction. The respective structures of the small diameter cylindrical section 560c and the disk section 560a are the same as the small diameter cylindrical section 56c and the disk section 56a of the flywheel 56 discussed above, and detailed descriptions will be omitted.

The inertia mass section 560b includes a disk-like shaped attaching disk section 560f and a cylindrical section 560g extending from an outer periphery of the attaching disk section 560f toward the rotary electrical machine 200 in the axial direction (see FIG. 12). The attaching disk section 560f has a plurality (four in this embodiment) of bolt holes (see FIG. 13). Each bolt hole is formed at a position spaced apart from the axis of the crankshaft 51 in the radial direction. The disk section 560a has bolt holes which number is the same as that of the attaching disk section 560f. Bolts 560h extend through the respective holes of the attaching disk section 560f, the respective holes of the disk section 560a corresponding thereto, and bolt holes formed in the one-way clutch 55. When the bolts are fastened, the flywheel 560 is attached to the one-way clutch 55 (see FIG. 12). Additionally, the inertia mass section 560b is exchangeable for another inertial mass section which has a different weight by removing the bolts 560h.

A head of each bolt 560h protrudes toward the rotary electrical machine 200 in the axial direction. A circular damper 560i formed with an elastic member such as a rubber member is put on the head. The head and the damper 560i together form a projection (i.e., engaged portion) 560j with which a recessed portion 240b of the rotor 210 which will be described below engages. The projections 560j and the recessed portions 240b will be described in greater detail below.

The rotary electrical machine 200 includes the rotor 210 and the stator 25. In this embodiment, similarly to the rotary electrical machine 20 discussed above, a stator having the fixed stator 30 and the movable stator 40 is employed as the stator 25.

As shown in FIG. 14, the rotor 210 includes a yoke 220, magnets 230 and a circularly shaped circular section 240 having a certain thickness in the axial direction. The yoke 220 has a circular inner cylindrical section 220b and a disk section 220a extending outward from the rim of the inner cylindrical section 220b in the radial direction. An inner diameter of the inner cylindrical section 220b is larger than an outer diameter of the crankshaft 51 and of the small diameter cylindrical section 560c of the flywheel 560, and the rotor 210 can slide in the axial direction.

The outer diameter of the circular section 240 corresponds to the outer diameter of the disk section 220a. The circular section 240 is fixed to a back surface of the circular section 220a (i.e., surface opposing the disk section 560a of the flywheel 560) by a plurality (four in this embodiment) of rivets 240a. Recessed portions (engaging portions) 240b each having a size corresponding to the respective projection 560j are formed in the circular section 240 at positions corresponding to the projections 560j of the flywheel 560 (see FIG. 14(c)). By moving the respective projections 560j in the recessed portions 240b relative thereto in the axial direction, the rotor 210 can slide in the axial direction. Also, when the rotary electrical machine 200 is attached, by sliding the rotor 210 into the flywheel 560, the respective projections 560j accept the recessed portions 240b, i.e., the respective projections 560j fit in the recessed portions 240b; thereby, they engage with each other so that the rotational force is transmitted. Consequently, the rotor 210 rotates with the flywheel 560. The recessed portions 240b and the projections 560j will be described in greater detail below.

The inner cylindrical section 220b of the yoke 220 has a portion-held-by-bearing 220e. Because the yoke 220 and the magnets 230 have the same structures as the yoke 22 and the magnets 23 of the rotary electrical machine 20 discussed above, respectively, detailed descriptions will be omitted.

Similarly to the rotary electrical machine 20 discussed above, the fixed stator 30 includes a plurality of the fixed teeth 34, the coils 31 wound around the multiple fixed teeth 34, and the resin section 36 which molds them. An outer circumferential portion 36b of the resin section 36 is formed so as to extend toward the case cover 19. A peripheral end thereof has a plurality of engaging portions 37. The respective engaging portions 37 are fastened to bolt holes 59 of the case cover 19 which are formed at positions corresponding to the engaging portions 37 by bolts. Although the fixed stator 30 of the rotary electrical machine 200 has three engaging portions 37, only one of the engaging portions 37 is shown in the cross sectional view of FIG. 12.

The case cover 19 has a cylindrically shaped stator support section 19a extending in the axial direction around the distal end 51c of the crankshaft 51. An outer circumferential surface of the stator support section 19a abuts an inner circumferential surface of the inner circumferential section 36a of the resin section 36. The inner circumferential section 36a has a bearing holding portion 36i. A bearing 63 is positioned between the bearing holding portion 36i and the portion-held-by-bearing 220e of the rotor 210. The fixed stator 30 supports the rotor 210 for rotation through the bearing 63 while keeping a spacing distance between each magnet 230 and the respective fixed tooth 34.

Similarly to the rotary electrical machine 20 discussed above, the movable stator 40 includes a plurality of the movable teeth 41 and the base 42, both of which are molded by the circular resin section 43. An inner circumferential surface 43f of the resin section 43 abuts an outer circumferential surface of the stator support section 19a. An inner portion of the resin section 43 opposing the fixed stator 30 (i.e., portion facing the crankshaft 51) abuts the inner circumferential section 36a. Also, a surface of the resin section 43 oppositely positioned to the surface opposing the fixed stator 30 abuts the outer circumferential surface of the stator support section 19a, i.e., a stator support surface 19b extending normal to the axial direction. Thus, the movable stator 40 is positioned by being interposed between the fixed stator 30 and the stator support surface 19b. In addition, thereby, the vibration of the movable stator 40 is inhibited.

The positions where the recessed portions 240b of the rotor 210 and the engaged portions 560j of the flywheel 560 are formed and an installing manner of the rotary electrical machine 200 to the body of the vehicle will be described below.

The relationships between the respective positions of the recessed portions 240b and the projections 560j are the same as those of the recessed portions 56e and the projections 22c of the rotary electrical machine 20 discussed above. That is, the recessed portions 240b and the projections 560j are placed to right oppose each other under the condition that the flywheel 560 is disposed at the reference angle and the rotor 210 is disposed at the stable angle.

In this regard, as discussed above, the stable angle of the rotor 210 is the angle at which the difference between respective densities of the magnetic fluxes formed between the magnets 230 neighboring each other and the fixed teeth 34 is the minimum and an angle at which the magnetic force affected the magnets balances, and no force is given to the rotor 210 in its rotational direction. The reference angle of the flywheel 560 is, for example, the angle at which the recessed portion 560d of the flywheel 560 is positioned atop thereof.

The rotary electrical machine 200 can be mounted to the motorcycle 100 as thus constructed in the following manner.

Similarly to the mounting manner of the rotary electrical machine 20 discussed above, first, the fixed stator 30, the movable stator 40 and the rotor 210 are united to each other by the attracting force between the magnets 230 and the fixed teeth 34. In this process, as shown in FIG. 15, the rotor 210 and the fixed stator 30 are opposed to each other, and the angle of the rotor 210 relative to the fixed stator 30 is set to the stable angle. Next, the engaging portions 37 of the fixed stator 30 are fastened to the bolt holes 59 of the case cover 19 by bolts; thereby, the rotor 210 and the stator 25 which are united to each other are attached to the case cover 19 to be placed at the respective reference positions. Also, the flywheel 560 is positioned at the reference angle described above. As a result, the recessed portions 240b of the rotor 210 right oppose the projections 560j of the flywheel 560 in the axial direction. Then, the case cover 19 is attached to the body of the vehicle together with the rotor 210 and the stator 25. In this process, the rotor 210 is sled into the flywheel 560 in the axial direction of the crankshaft 51, and the projections 560j fit in the recessed portions 240b which are correspondingly positioned thereto and engage with them so that the rotational force can be transmitted.

According to the motorcycle 100 discussed above, the fixed stator 30 attracts the rotor 210 by the magnetic force to support the rotor 210 for rotation. Thus, the stator 25, the case cover 19 and the rotor 210 can be united to each other before they are attached to the crankshaft 51. The flywheel 560 has the projections 560j extending toward the rotary electrical machine 200 in the axial direction, while the rotor 210 has the recessed portions 240b which hollows correspondingly to the configurations of the respective projections 560j of the rotor 210. Thereby, the projections 560j fit in the recessed portions 240b, and the united case cover 19, stator 25 and rotor 21 are mounted to the crankshaft 51.

Additionally, in the above descriptions, a motorcycle having an axial gap type rotary electrical machine is discussed. The teaching of the present embodiment, however, can apply to a motorcycle that has a radial gap type rotary electrical machine. Such a rotary electrical machine can be constructed as follows, for example.

A stator is circularly formed to surround a rotational axis. A rotor is cylindrically formed to surround the stator so that magnets of the rotor oppose to teeth in a radial direction. The stator supports the rotor for rotation by a surface of the stator opposing the rotor. A surface of the rotor opposing a flywheel has engaging portions for engaging with the flywheel. The flywheel is mounted to a crankshaft in such a manner that the flywheel opposes the rotary electrical machine in an axial direction. The flywheel has engaged portions positioned correspondingly to the engaging portions of the rotor. The engaging portions and the engaged portions engage with each other; thereby, the rotor can rotate about the rotational axis together with the flywheel.

The description above discloses (amongst others) in order to solve the problem, an embodiment of a straddle-type vehicle including a rotary electrical machine having a stator, and a rotor attached to the stator for rotation and rotating together with a rotational shaft, and a rotary member opposing the rotor in an axial direction of the rotational shaft. The stator supports the rotor for rotation. The rotor has an engaging portion. The rotary member has an engaged portion engaging with the engaging portion in the axial direction.

A method for assembling the straddle-type vehicle, according to this embodiment, includes the steps of opposing the rotor and the stator with each other, and uniting them to each other by magnetic force, and attaching the rotor and the stator united to each other to the body of the vehicle, and engaging the engaging portion of the rotor with the engaged portion of the rotary member.

According to this embodiment, the stator supports the rotor for rotation. Thus, the stator and the rotor can be united to each other first and then the united stator and rotor can be mounted to the body of the vehicle. The installing work of the rotary electrical machine to the body of the vehicle can be made easily. That is, if, for example, the stator is installed after the rotor is fixed to the rotational member, keeping the stator in its right position is difficult because the rotor attracts the stator. According to this embodiment, however, the rotor and the stator can be mounted to the body of the vehicle after they are united to each other. The installing work thus can become easier.

The rotary member can be, for example, a crankshaft, a flywheel, a clutch housing, a sheave of a continuously variable transmission or the like. The rotary electrical machine can be an axial gap type one in which the rotor opposes the stator in an axial direction of the rotational shaft, or can be a radial gap type one in which the rotor and the stator oppose each other in a radial direction.

In one aspect of this embodiment, the rotary electrical machine includes a magnet and a tooth giving a channel of magnetic fluxes formed between the magnet and the tooth, the rotor has either one of the magnet or the tooth, and the rotor is disposed for slide movement in the axial direction, the stator has the other one of the magnet or the tooth, and the stator supports the rotor for rotation while keeping a spacing distance between the one and the other one.

According to the aspect, the spacing distance between the magnet and the tooth can be accurately set. For example, even if there is an error in a position of the rotary member in the axial direction or an error in a position of the stator in the axial direction, the distance between the magnet and the tooth can be accurately set because the rotor is slidable in the axial direction.

In this aspect, the rotor can have a surface-held-by-bearing, the stator can have a bearing holding surface, and the bearing holding surface can hold the surface-held-by-bearing for rotation via a bearing. Thereby, the spacing distance between the magnet and the tooth can be accurately set, and the rotor can smoothly rotate. In this regard, the rotary electrical machine can have a plurality of the magnets and the teeth, and the plurality of the magnets and the plurality of the teeth can be placed to surround the rotary shaft.

In this aspect, a rotational angle of the rotary member is decided to be a reference angle at which the rotary member takes a reference position relative to a body of the vehicle. A rotational angle of the rotor relative to the stator is decided to be a stable angle at which the stator stably supports the rotor by attracting force between the plurality of the magnets and the plurality of the teeth. The engaging portion and the engaged portion right oppose each other under a condition that the rotor is positioned at the stable angle and the rotary member is positioned at the reference angle.

A method for assembling the straddle-type vehicle according to this aspect includes the steps of supporting the rotor at the stable angle by the stator, and uniting the rotor and the stator to each other, placing the rotary member at the reference angle, right opposing the engaging portion of the rotor united to the stator and the engaged portion of the rotary member, and attaching the rotor and the stator united to each other to the body of the vehicle, and engaging the engaging portion of the rotor with the engaged portion of the rotary member.

Thereby, when the rotary electrical machine is installed, the rotor can be positioned at the stable angle by the magnetic force (i.e., an angle at which a rotation relative to the stator is inhibited (or, an angle at which a cogging is inhibited)), and the rotary member can be placed at the reference angle (i.e., reference angle relative to the body of the vehicle). The engaging portion and the engaged portion thus can right oppose each other. Therefore, for example, when the rotary electrical machine is installed, the respective positions of the engaging portion and the engaged portion do not need looking to confirm that they right oppose each other. The installing work of the rotary electrical machine can be easier, accordingly.

A cover for covering the rotary electrical machine in the axial direction of the rotational shaft can be provided. The stator is attachable to the cover, and the stator can be attached to the cover under a condition that the stator supports the rotor at the stable angle when the rotary electrical machine is mounted to the body of the vehicle.

A method for assembling the straddle-type vehicle according to this aspect includes the steps of supporting the rotor at the stable angle by the stator, attaching the stator to the cover, and uniting the rotor, the stator and the cover to each other, placing the rotary member at the reference angle, right opposing the engaging portion of the rotor and the engaged portion of the rotary member, and attaching the rotor, the stator and the cover united to each other to the body of the vehicle, and engaging the engaging portion of the rotor with the engaged portion of the rotary member.

Thereby, when the stator is attached to the cover, and the stator supports the rotor at the stable angle (i.e., an angle at which a rotation relative to the stator is inhibited (or, an angle at which a cogging is inhibited)), the engaging portion and the engaged portion right oppose each other if the rotary member is at the reference angle. Consequently, when the rotary electrical machine and the cover are installed, the respective positions of the engaging portion and the engaged portion do not need looking to confirm that they right oppose each other. In addition, under a condition that the stator is attached to the cover, and the stator, the rotor and the cover are united to each other, they can be attached to the body of the vehicle.

In this regard, the plurality of the magnets and the plurality of the teeth can form magnetic fluxes therebetween, and the stable angle of the rotor is an angle at which a difference between respective densities of the magnetic fluxes formed by the magnets neighboring each other is the minimum. Thereby, when the rotary electrical machine is attached, the rotor can be easily positioned at the angle at which the rotation relative to the stator is inhibited (the angle at which a cogging of the rotor is inhibited), i.e., at the stable angle. That is, at the angle at which the difference between the respective densities is the minimum, i.e., at the angle at which the difference between the density of space magnetic fluxes between the magnet and the tooth and the density of space magnetic fluxes between the next magnet and tooth is the minimum, the magnetic force affected to the rotor in the rotational direction can balance, and the angle at which the rotor is attached to the stator can be stable.

The stable angle of the rotor can be an angle at which two of the magnets neighboring each other right oppose two of the plurality of the teeth and entirely overlap with the two of the teeth in the axial direction.

The stable angle of the rotor can be an angle at which respective parts of two of the teeth neighboring each other overlap with one of the plurality of the magnets in the axial direction, and sizes of the respective parts of two of the teeth can be equal to each other. Also, the stable angle of the rotor can be an angle at which the tooth neighboring either one of the two of the teeth right opposes to any one of the plurality of the magnets.

In another aspect of this embodiment, either one of the engaging portion of the rotor or the engaged portion of the rotary member can have a damping section for damping a collision with each other when the rotor rotates.

According to the aspect, the collision of the engaging portion and the engaged portion with each other can be damped, and, for example, noise following the rotation of the rotary electrical machine can be reduced.

In a further aspect of this embodiment, the rotary member is a flywheel. Thereby, there is no need to newly provide a component which is not normally incorporated, as the rotary member.

The description above discloses, as a preferred first aspect, an embodiment of a straddle-type vehicle comprising: a rotary electrical machine including a stator, and a rotor attached to said stator for rotation and rotating together with a rotational shaft; and a rotary member opposing said rotor in an axial direction of said rotational shaft, wherein said stator supports said rotor for rotation, said rotor has an engaging portion, and said rotary member has an engaged portion engaging with said engaging portion in the axial direction.

Further, according to a preferred second aspect, said rotary electrical machine includes a magnet and a tooth giving a channel of magnetic fluxes formed between said magnet and said tooth, said rotor has either one of said magnet or said tooth, and said rotor is disposed for slide movement in the axial direction, and said stator has the other one of said magnet or said tooth, and said stator supports said rotor for rotation while keeping a spacing distance between the one and the other one.

Further, according to a preferred third aspect, said rotor has a surface-held-by-bearing, said stator has a bearing holding surface, and said bearing holding surface holds said surface-held-by-bearing for rotation via a bearing.

Further, according to a preferred fourth aspect, said rotary electrical machine has a plurality of said magnets and said teeth, and the plurality of said magnets and the plurality of said teeth are placed to surround said rotational shaft.

Further, according to a preferred fifth aspect, a rotational angle of said rotary member is decided to be a reference angle at which said rotary member takes a reference position relative to a body of the vehicle, a rotational angle of said rotor relative to said stator is decided to be a stable angle at which said stator stably supports said rotor by attracting force between the plurality of said magnets and the plurality of said teeth, and said engaging portion and said engaged portion right oppose each other under a condition that said rotor is positioned at the stable angle and said rotary member is positioned at the reference angle.

Further, according to a preferred sixth aspect, the straddle-type vehicle further comprises a cover for covering said rotary electrical machine in the axial direction of said rotational shaft, said stator capable of being attached to said cover, and said stator being attached to said cover under a condition that said stator supports said rotor at the stable angle when said rotary electrical machine is mounted to the body of the vehicle.

Further, according to a preferred seventh aspect, the plurality of said magnets and the plurality of said teeth form magnetic fluxes therebetween, and the stable angle of said rotor is an angle at which a difference between respective densities of the magnetic fluxes formed by said magnets neighboring each other is the minimum.

Further, according to a preferred eighth aspect, the stable angle of said rotor is an angle at which two of said magnets neighboring each other right oppose two of the plurality of said teeth and entirely overlap with the two of said teeth in the axial direction.

Further, according to a preferred ninth aspect, the stable angle of said rotor is an angle at which respective parts of two of said teeth neighboring each other overlap with one of the plurality of said magnets in the axial direction, and sizes of the respective parts of two of said teeth are equal to each other.

Further, according to a preferred tenth aspect, the stable angle of said rotor is an angle at which said tooth neighboring either one of the two of said teeth right opposes to any one of the plurality of said magnets.

Further, according to a preferred eleventh aspect, either one of the engaging portion of said rotor or the engaged portion of said rotary member has a damping section for damping a collision with each other when said rotor rotates.

Further, according to a preferred twelfth aspect, said rotary member is a flywheel.

Further, the description discloses a method for assembling the straddle-type vehicle according to the above first aspect, comprising the steps of: opposing said rotor and said stator with each other, and uniting them to each other by magnetic force; and attaching said rotor and said stator united to each other to the body of the vehicle, and engaging the engaging portion of said rotor with the engaged portion of said rotary member.

Further, the method for assembling the straddle-type vehicle according to the above fifth aspect described above, comprises the steps of: supporting said rotor at the stable angle by said stator, and uniting said rotor and said stator to each other; placing said rotary member at the reference angle; right opposing the engaging portion of said rotor united to said stator and the engaged portion of said rotary member; and attaching said rotor and said stator united to each other to the body of the vehicle, and engaging the engaging portion of said rotor with the engaged portion of said rotary member.

Further, the method for assembling the straddle-type vehicle according to the sixth aspect described above, comprises the steps of: supporting said rotor at the stable angle by said stator, attaching said stator to said cover, and uniting said rotor, said stator and said cover to each other; placing said rotary member at the reference angle; right opposing the engaging portion of said rotor and the engaged portion of said rotary member; and attaching said rotor, said stator and said cover united to each other to the body of the vehicle, and engaging the engaging portion of said rotor with the engaged portion of said rotary member.

The description above further discloses in order to provide a straddle-type vehicle that can make installing work of a rotary electrical machine easier, a motorcycle which includes a rotary electrical machine having a stator, and a rotor 21 attached to the stator for rotation and rotating together with a crankshaft 51, and a flywheel 56 opposing the rotor 21 in an axial direction of the crankshaft 51. The stator supports the rotor 21 for rotation. The rotor 21 has projections 22c, while the flywheel 56 has recessed portions 56e engaging with the projections 22c in the axial direction.

## Claims

1. Straddle-type vehicle comprising
a rotary electrical machine including a stator, and a rotor attached to said stator for rotation and rotating together with a rotational shaft, and
a rotary member opposing said rotor in an axial direction of said rotational shaft, wherein
said stator supports said rotor for rotation,
said rotor has an engaging portion, and
said rotary member has an engaged portion engaging with said engaging portion in the axial direction.

2. Straddle-type vehicle according to claim 1, wherein
said rotary electrical machine includes a magnet and a tooth giving a channel of magnetic fluxes formed between said magnet and said tooth,
said rotor has either one of said magnet or said tooth, and said rotor is disposed for slide movement in the axial direction, and
said stator has the other one of said magnet or said tooth, and said stator supports said rotor for rotation while keeping a spacing distance between the one and the other one.

3. Straddle-type vehicle according to claim 2, wherein
said rotor has a surface-held-by-bearing,
said stator has a bearing holding surface, and
said bearing holding surface of the stator holds said surface-held-by-bearing of the rotor for rotation via a bearing.

4. Straddle-type vehicle according to claim 2 or 3, wherein
said rotary electrical machine has a plurality of said magnets and said teeth, and the plurality of said magnets and the plurality of said teeth are placed to surround said rotational shaft.

5. Straddle-type vehicle according to claim 4, wherein
a rotational angle of said rotary member is decided to be a reference angle at which said rotary member takes a reference position relative to a body of the vehicle,
a rotational angle of said rotor relative to said stator is decided to be a stable angle at which said stator stably supports said rotor by attracting force between the plurality of said magnets and the plurality of said teeth, and
said engaging portion and said engaged portion right oppose each other under a condition that said rotor is positioned at the stable angle and said rotary member is positioned at the reference angle.

6. Straddle-type vehicle according to claim 5, further comprising
a cover for covering said rotary electrical machine in the axial direction of said rotational shaft, said stator capable of being attached to said cover, and
said stator being attached to said cover under a condition that said stator supports said rotor at the stable angle when said rotary electrical machine is mounted to the body of the vehicle.

7. Straddle-type vehicle according to claim 5, wherein
the plurality of said magnets and the plurality of said teeth form magnetic fluxes therebetween, and
the stable angle of said rotor is an angle at which a difference between respective densities of the magnetic fluxes formed by said magnets neighboring each other is the minimum.

8. Straddle-type vehicle according to claim 5, wherein
the stable angle of said rotor is an angle at which two of said magnets neighboring each other right oppose two of the plurality of said teeth and entirely overlap with the two of said teeth in the axial direction.

9. Straddle-type vehicle according to claim 5, wherein
the stable angle of said rotor is an angle at which respective parts of two of said teeth neighboring each other overlap with one of the plurality of said magnets in the axial direction, and
sizes of the respective parts of two of said teeth are equal to each other.

10. Straddle-type vehicle according to claim 9, wherein
the stable angle of said rotor is an angle at which said tooth neighboring either one of the two of said teeth right opposes to any one of the plurality of said magnets.

11. Straddle-type vehicle according to one of the claims 1 to 10, wherein
either one of the engaging portion of said rotor or the engaged portion of said rotary member has a damping section for damping a collision with each other when said rotor rotates.

12. Straddle-type vehicle according to one of the claims 1 to 11, wherein said rotary member is a flywheel.

13. Straddle-type vehicle according to claim 12, including
the rotary electrical machine having the stator and the rotor (21) attached to the stator for rotation and rotating together with a crankshaft (51), and
the flywheel (56) opposing the rotor (21) in an axial direction of the crankshaft (51), wherein the stator supports the rotor (21) for rotation, and
wherein the rotor (21) has projections (22c), while the flywheel (56) has recessed portions (56e) engaging with the projections (22c) in the axial direction.

14. Method for assembling the straddle-type vehicle according to one of the claims 1 to 13, comprising the steps of
opposing said rotor and said stator with each other, and uniting them to each other by magnetic force, and
attaching said rotor and said stator united to each other to the body of the vehicle, and
engaging the engaging portion of said rotor with the engaged portion of said rotary member.

15. Method for assembling the straddle-type vehicle according to one of the claims 5 to 13, comprising the steps of
supporting said rotor at the stable angle by said stator, and uniting said rotor and said stator to each other,
placing said rotary member at the reference angle,
right opposing the engaging portion of said rotor united to said stator and the engaged portion of said rotary member, and attaching said rotor and
said stator united to each other to the body of the vehicle, and engaging the engaging portion of said rotor with the engaged portion of said rotary member.

16. Method for assembling the straddle-type vehicle according to one of the claims 6 to 13, comprising the steps of
supporting said rotor at the stable angle by said stator, attaching said stator to said cover, and uniting said rotor, said stator and said cover to each other,
placing said rotary member at the reference angle,
right opposing the engaging portion of said rotor and the engaged portion of said rotary member, and
attaching said rotor, said stator and said cover united to each other to the body of the vehicle, and engaging the engaging portion of said rotor with the engaged portion of said rotary member.
